# EUROPEAN PATENT APPLICATION

(11) **EP 2 339 205 A2**
(43) Date of publication of application: **29.06.2011**
(21) Application number: 10195291.9
(22) Date of filing: 16.12.2010
(51) Int. Cl.: F16F 15/03

(54) **Temperature compensation tunable magnetic damping**

(30) Priority: 22.12.2009 US 644321
(71) Applicant: ITT Manufacturing Enterprises, Inc., Wilmington, Delaware 19801 (US)
(72) Inventor: Vallone, Phillip, Honeoye Falls, NY 14472 (US); Gates, Douglas W., Rochester, NY 14610 (US); Fasick, John C., Lima, NY 14485 (US); Brewen, Alan T., Rochester, NY 14534 (US)
(74) Representative: Dreiss

(57) **Abstract**

A damping apparatus is disclosed including at least one pair of magnets, a conducting member, a magnetic shunt, and a temperature sensing mechanism. The pair of magnets defines a gap therebetween. The magnets generate a magnetic flux circuit having a magnetic flux path within the gap and a magnetic flux return path outside the gap. The conducting member is positioned at least partially within the gap. The magnetic shunt is positioned at least partially within the magnetic flux return path of the magnets. The temperature sensing mechanism is coupled to the magnetic shunt. The temperature sensing mechanism is configured to control a position of the magnetic shunt based on a sensed temperature.

## Description

### FIELD OF THE INVENTION

This invention relates to the field of linear vibration damping apparatus, and more particularly to magnetic dampers.

### BACKGROUND OF THE INVENTION

Linear dampers are devices designed to provide absorption of shock and smooth deceleration in linear motion applications. Dampers provide shock absorption through the application of a damping force in the direction of the linear motion. Dampers may generate the damping force from a variety of means. Dampers may be mechanical (e.g., elastomeric or wire rope isolators), fluid (e.g. gas, air, hydraulic), or even magnetic (e.g. through magnetically induced eddy currents).

Magnetic dampers provide a linear damping element in a compact form. Magnetic dampers do not suffer from certain problems associated with hydraulic dampers including friction or leaking of fluids. Additionally, magnetic dampers can operate more consistently over wider temperature ranges than fluidic dampers. An exemplary magnetic damper is disclosed in US 2007/0131830 A1, which is included herein by reference.

### SUMMARY OF THE INVENTION

Aspects of the present invention are directed to damping apparatus and methods for providing damping force. In accordance with one aspect of the present invention, a damping apparatus includes a pair of magnets and a temperature sensing mechanism. The pair of magnets defines a gap therebetween. The magnets generate a magnetic flux circuit having a magnetic flux path within the gap and a magnetic flux return path outside the gap. The temperature sensing mechanism is configured to control a strength of magnetic flux in the magnetic flux return path based on a sensed temperature.

In accordance with another aspect of the present invention, a damping apparatus includes at least one pair of magnets, a conducting member, a magnetic shunt, and a temperature sensing mechanism. The at least one pair of magnets defines a gap therebetween. The magnets generate a magnetic flux circuit having a magnetic flux path within the gap and a magnetic flux return path outside the gap. The conducting member is positioned at least partially within the gap. The magnetic shunt is positioned at least partially within the magnetic flux return path of the magnets. The temperature sensing mechanism is coupled to the magnetic shunt. The temperature sensing mechanism is configured to control a position of the magnetic shunt based on a sensed temperature.

In accordance with yet another aspect of the present invention, a method of providing a damping force to a payload subject to vibration includes generating with a pair of magnets a magnetic flux circuit having a magnetic flux path and a magnetic flux return path. A conducting member is provided within the magnetic flux path. The conducting member is configured to vibrate relative to the pair of magnets in response to the vibration of the payload. A temperature of one of the pair of magnets and the conducting member is determined. A strength of magnetic flux through the conducting member is controlled based on the sensed temperature.

Further aspects of the present invention are mentioned in the claims.

### BRIEF DESCRIPTION OF THE DRAWINGS

The invention is best understood from the following detailed description when read in connection with the accompanying drawings, with like elements having the same reference numerals. When a plurality of similar elements are present, a single reference numeral may be assigned to the plurality of similar elements with a small letter designation referring to specific elements. When referring to the elements collectively or to a non-specific one or more of the elements, the small letter designation may be dropped. This emphasizes that according to common practice, the various features of the drawings are not drawn to scale. On the contrary, the dimensions of the various features are arbitrarily expanded or reduced for clarity. Included in the drawings are the following figures:
FIG. 1 is a top view of an exemplary damping apparatus in accordance with an aspect of the present invention;
FIG. 2 is a side view of an exemplary magnetic flux circuit of the damping apparatus of FIG. 1;
FIG. 3 is a perspective view of the exemplary magnetic flux circuit of the damping apparatus of FIG. 1;
FIG. 4 is another side view of the exemplary magnetic flux circuit of the damping apparatus of FIG. 1; and
FIG. 5 is a flow chart of exemplary steps for providing a damping force to a payload in accordance with an aspect of the present invention.

### DETAILED DESCRIPTION OF THE INVENTION

The present invention relates to a temperature compensating damping apparatus, and may be embodied in any magnetic damping apparatus. Exemplary damping apparatus of the present invention are devices which achieve weight and volume efficiencies adequate to meet the requirements of many applications related to space payload vibration isolation.

For the purpose of describing the function of the present invention, it may be assumed that an instrument or other material is subject to vibration caused by a vibrational force. The instrument subject to vibration may include a first portion (i.e. a base) and a second portion (i.e. a payload) which vibrate relative to each other. An exemplary damping apparatus of the present invention may be provided at the base to provide a damping force to the payload and, therefore, decrease the relative vibration. It will be understood, however, that the exemplary damping apparatus may be coupled to any body in which relative vibration is undesirable.

The damping force provided by the exemplary damping apparatus may be applied to space payload vibration isolation systems that limit the weight and volume of the vibrating element to predetermined amounts. The damping force provided by the exemplary damping apparatus, however, may also be applied to other applications, such as for example, ground test vibrations, vehicle vibration (i.e. cars, trains, planes, etc.), laboratory and fabrication equipment vibration (i.e. optical tables, micro-lithography and precision machine tools) and ground telescope isolation.

In general, an exemplary damping apparatus of the present invention includes a pair of magnets defining a gap. A conducting member may be positioned at least partially within the gap. The present invention decreases displacement of the conducting member by providing a damping force (e.g. through magnetically induced eddy currents) in opposition of the vibrational force on the payload. The vibrational force from the payload is applied to the conducting member (e.g., conductive vanes), thereby causing the conducting member to vibrate in the gap between the magnets. A damping force is provided to the conducting member by the magnets as the conducting member moves between the magnets. The damping force on the conducting member, in turn, is applied to the payload, and the vibration of the payload is reduced.

In the exemplary apparatus, the pair of magnets generates a magnetic flux circuit having a magnetic flux path through the gap and a magnetic flux return path outside the gap. The damping force on the conducting member is dependent on the magnitude of the magnetic flux path passing through the conducting member. For example, the magnitude of the magnetic flux path is controlled by positioning magnetically permeable material (e.g., a magnetic shunt) in the magnetic flux return path. The magnitude of the magnetic flux return path and therefore the magnetic flux path through the conductor may also be controlled based on temperature.

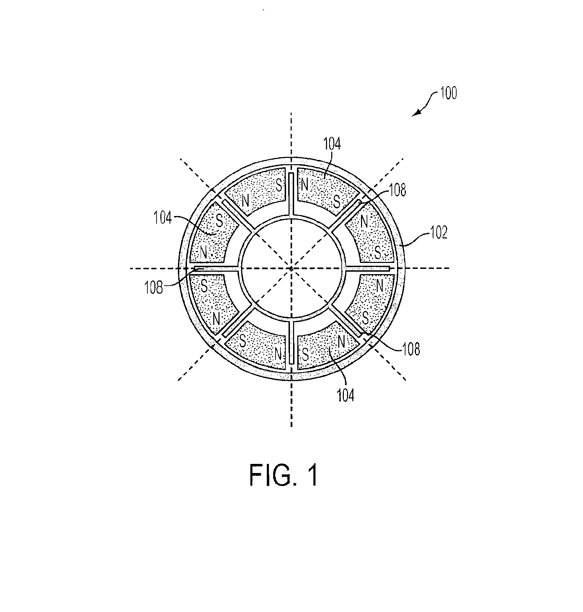

The invention will now be described with regard to the accompanying drawings. FIGS. 1 is a diagram of an exemplary damping apparatus 100 according to an aspect of the present invention. As described above, damping apparatus 100 may be used to damp the vibration of a payload relative to a base. Damping apparatus 100 includes a housing 102, magnets 104, a conducting member 108, a magnetic core 110, a magnetic shunt 112, and a temperature sensing mechanism 114. Additional details of damping apparatus 100 are now described below.

In an exemplary embodiment, housing 102 is attached to a base (not shown). Housing 102 may include support for the elements of damping apparatus 100, the latter providing the payload with a damping force. As illustrated in FIG. 1, housing 102 may have a generally cylindrical outer shape. It is contemplated, however, that housing 102 may be formed of any shape to accommodate and support the elements of apparatus 100. The housing 102 may be formed from suitable non-magnetic materials or a combination of magnetic and non-magnetic materials.

Magnets 104 generate a magnetic field within damping apparatus 100. In an exemplary embodiment, magnets 104 are grouped in one or more pairs to form one or more gaps 106, as illustrated in FIG. 1. The position of magnets 104 may be fixed within housing 102 and may extend axially through housing 102. As illustrated in FIG. 1, magnets 104 may be circumferentially arranged to define one or more radial gaps 106 through housing 102. It will be understood, however, that magnets 104 may have any orientation to form gaps 106.

As will be described below, pairs of magnets 104 are spaced apart to generate a magnetic flux path extending between magnets 104, through gap 106. Damping apparatus 100 may include one or more pairs of magnets 104. Multiple pairs of magnets 104 may define multiple gaps 106, or a single longer gap 106. As illustrated in FIG. 1, each gap 106 is configured to receive a conducting member 108. Magnets 104 may be any suitable type of permanent magnets, such as rare earth magnets. Magnets 104 may also be electromagnets. As will be described herein, magnets 104 and conducting members 108 may be arranged interchangeably in arrangement with respect to apparatus 100.

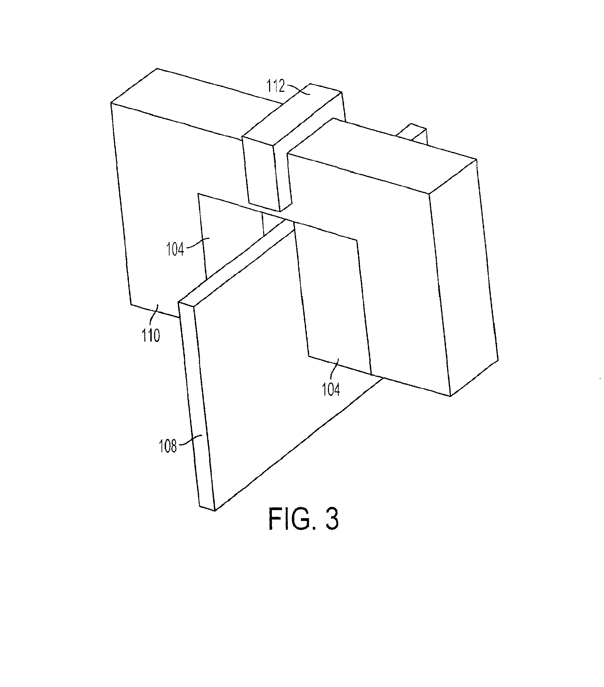

Conducting member 108 extends into gap 106. In an exemplary embodiment, conducting member 108 is connected to a payload (not shown) and positioned within gap 106. Conducting member 108 is configured to vibrate in response to a vibration of the payload. For example, conducting member 108 may be directly coupled to the payload and, thereby, receive a direct vibrational force from the payload. Alternatively, conducting member 108 may extend from a rod or another member that is coupled to the payload. Conducting member 108 then receives an indirect vibrational force from the rod or other member in response to a vibration of the payload. In general, conducting member 108 may vibrate in any direction within a plane of gap 106 in which it is positioned, as illustrated by the arrows in FIG. 3.

As illustrated in FIG. 1, conducting members 108 may be substantially flat sheets of conducting material, such as conducting vanes. Further, conducting members may extend radially outward within housing 102, as illustrated in FIG. 1. It will be understood, however, that conducting members 108 may have any shape and orientation within gaps 106. For example, it is contemplated that magnets 104 may be positioned to define circumferential gaps, in which cylindrical conducting members 108 are positioned.

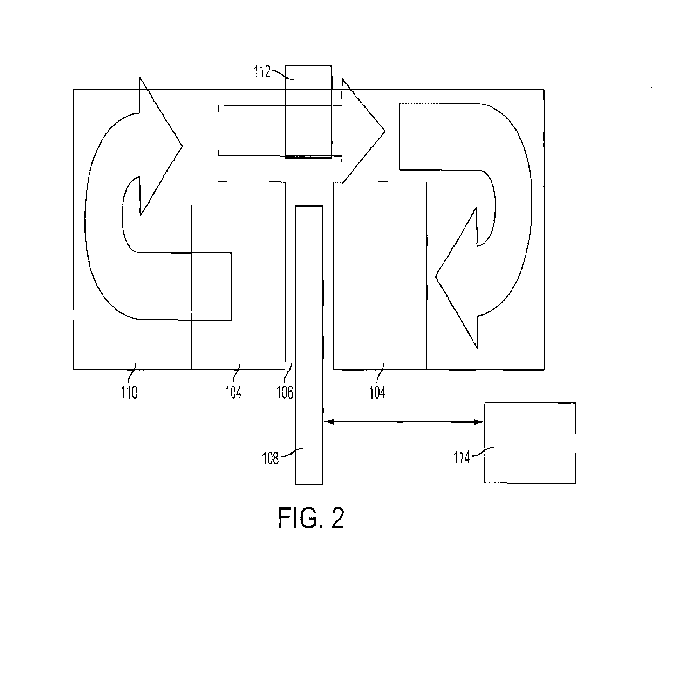

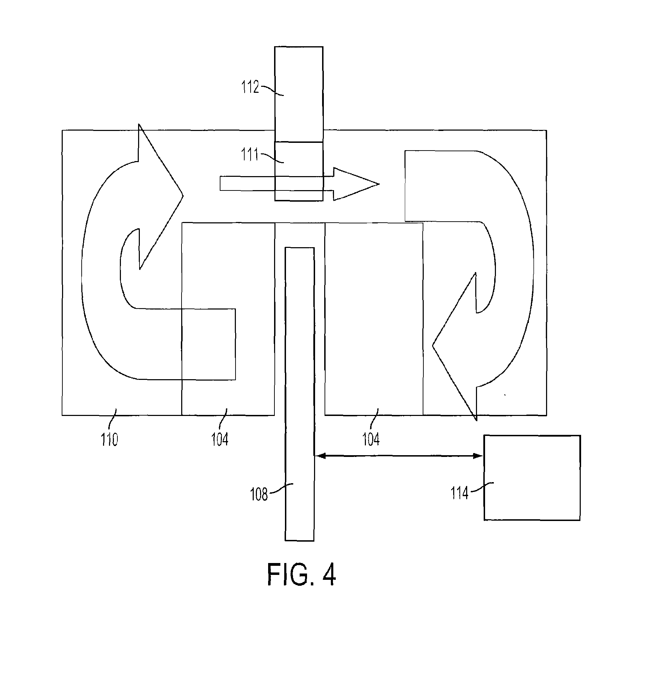

Magnetic core 110 defines a magnetic flux return path portion between pairs of magnets 104. In an exemplary embodiment, magnets 104 generate a magnetic flux circuit substantially within damping apparatus 100. The magnetic flux circuit includes a magnetic flux path portion extending through gap 106 and a magnetic flux return path portion extending through magnetic core 110 (illustrated by arrows in FIGS. 2 and 4). Magnetic core 110 extends from a surface of one magnet 104 to a surface of an adjacent magnet 104 to define the magnetic flux return path between magnets 104. For example, magnetic core 110 may contact surfaces of magnets 104 opposite the surfaces of magnets 104 defining gap 106. Magnetic core 110 is positioned to define the magnetic flux return path without intervening into gap 106, as illustrated in FIG. 2.

Magnetic core 110 may be formed from a highly magnetically permeable material such as, for example, ductile iron or permendure. This material may facilitate a strong magnetic flux in the magnetic flux return path. Magnetic core 110 may further define a slot 111 for receiving a magnetic shunt 112. The slot 111 in magnetic core 110 may be operable for controlling the strength of the magnetic flux in the magnetic flux return path.

Magnet shunt 112 is positionable within the slot 111 in magnetic core 110. In an exemplary embodiment, the position of magnetic shunt 112 controls the strength of the magnetic flux in the magnetic flux return path. Magnetic shunt 112 is formed a highly magnetically permeable materials. Magnetic shunt 112 may be formed from the same or different materials as magnetic core 110. As illustrated in FIG. 2, magnetic shunt 112 may be fully inserted in slot 111. In this configuration, the highly permeable magnetic material of shunt 112 defines a portion of the magnetic flux return path. This causes a greater magnetic flux in the magnetic flux return path (as illustrated by the large arrow in FIG. 2). As illustrated in FIG. 4, magnetic shunt 112 may be withdrawn from slot 111. In this configuration, slot 111, and not shunt 112, defines a portion of the magnetic flux return path. Because slot 111 is less magnetically permeable, this causes a weaker magnetic flux in the magnetic flux return path (as illustrated by the small arrow in FIG. 4). It will be understood by one of ordinary skill in the art that the strength of the magnetic flux in the magnetic flux return path will necessary control the magnetic flux through the entire magnetic flux circuit generated by magnets 104.

Temperature sensing mechanism 114 senses a temperature of damping apparatus 100. In an exemplary embodiment, temperature sensing mechanism 114 is configured to control the position of magnetic shunt 112 based on the sensed temperature. As will be described herein, temperature sensing mechanism 114 may sense a temperature of magnets 104 or conducting member 108. As illustrated in FIGS. 2 and 4, temperature sensing mechanism 114 may be coupled to the conducting member 108 in order to detect a temperature of conducting member 108. Alternatively, temperature sensing mechanism 114 may be configured to sense a temperature at another portion of apparatus 100, from which the temperature of conducting member 108 can be deduced.

Temperature sensing mechanism 114 may then insert or withdraw shunt 112 based on the temperature sensed by temperature sensing mechanism 114. In an exemplary embodiment, temperature sensing mechanism 114 may include a controller (not shown) for controlling the position of shunt 112. Thus, temperature sensing mechanism 114 may control the flux in the magnetic flux return path based on the sensed temperature. Temperature sensing mechanism 114 may be, for example, a thermistor. Temperature sensing mechanism 114 may actively or passively control the position of magnetic shunt 112. Temperature sensing mechanism 114 may passively control magnetic shunt 112, for example, by use of a thermally operated bimetal actuator. Alternatively, temperature sensing mechanism 114 may actively control magnetic shunt 112, for example, by use of a suitable electromechanical actuator and controller. Suitable temperature sensing mechanisms, actuators, and controllers are understood by one of ordinary skill in the art.

It will be appreciated that the size, shape and position of housing 102, magnets 104, conducting members 108, magnetic core 110, and magnetic shunt 112 are illustrative and not limiting. Additionally, the numbers of conducting members and magnets shown in FIG. 1 are illustrative and not limiting. It will further be appreciated that either conducting members 108 or permanent magnets 104 may be coupled to a payload. Thus, it is contemplated that magnets 104 may vibrate within gaps formed by fixed conducting members 108.

The interaction between magnets 104 and conducting member 108 will now be described in accordance with an aspect of the present invention. As described above, magnets 104 generate a magnetic flux path through gap 106. The magnetic flux path may flow through conducting member 108 in a direction substantially orthogonal to the direction of motion of conducting member 108. Any movement of conducting members 108 within the magnetic flux path induces eddy currents in conducting member 108. These eddy currents generate an opposing magnetic field through conducting member 108, the latter generating a damping force on conducting member 108.

It will be understood by one of skill in the art that the strength of the damping force generated is dependent on the magnitude of the eddy currents. Thus, the damping force provided to conducting member 108 may be controlled by controlling a magnitude of the eddy currents in conducting member 108.

One factor that affects the magnitude of the eddy currents is the resistance of conducting member 108. The magnitudes of eddy currents in conducting member 108 are opposed by the resistance in conducting member 108. Thus, for example, as the resistance of conducting member 108 increases, eddy currents decrease, and a smaller damping force is generated. Conversely, as the resistance of conducting member 108 decreases, eddy currents increase, and a larger damping force is generated.

Another factor that affects the magnitude of the eddy currents relates to the magnetic flux path that induces the eddy currents. As described above, the eddy currents in conducting member 108 are created by the magnetic flux path. Thus, as the strength of the magnetic flux in the magnetic flux path increases, eddy currents increase, and a larger damping force is generated. Conversely, as the strength of the magnetic flux in the magnetic flux path decreases, eddy currents decrease, and a smaller damping force is generated.

During operation of damping apparatus 100, as the conducting member 108 vibrates relative to magnets 104, eddy currents are created, causing a damping force. The flow of eddy currents in conducting member may cause an increase in temperature of conducting member 108. It will be understood that the resistance of conducting member 108 varies based on its temperature. For example, as the temperature of conducting member 108 increases, its resistance also increases. In turn, the eddy currents in conducting member 108 decrease, causing a decrease in damping force.

It may be desirable for the damping force provided by damping apparatus 100 to remain constant over a broad range of temperatures. Thus, aspects of the invention are related to controlling the eddy currents generated in conducting member 108, in response to a change in temperature of damping apparatus 100.

In an exemplary embodiment, temperature sensing mechanism 114 may sense that the temperature of conducting member 108 has increased. As described above, an increase in temperature causes an increase in the resistance of conducting member 108, and a decrease in the magnitude of eddy currents flowing through conducting member 108. To counteract this decrease, the temperature sensing mechanism 114 may be configured to increase the strength of the magnetic flux. As described above, an increase in magnetic flux strength causes an increase in the magnitude of eddy currents flowing through conducting member 108. Thus, the temperature sensing mechanism 114 may be configured to increase the magnetic flux strength in the magnetic flux circuit in response to an increase in temperature of conducting member 108, and vice versa.

For example, consider an exemplary device designed to provide a particular damping coefficient when the conductor 108 is at operating temperature T. This example device may be designed to provide substantially constant damping over a temperature range extending from a minimum temperature, T-T1, to a maximum temperature, T+T2. In this example temperature sensing mechanism 114 may sense that conducting member 108 and/or magnets 104 are at a high temperature, T+T2. A high temperature for conducting member 108 and/or magnets 104 may be around approximately 189,4°C (373 K). At a high sensed temperature, temperature sensing mechanism 114 may increase the flux strength in the magnetic flux circuit, and thus in the magnetic flux path through conducting member 108. The temperature sensing mechanism 114 may increase the flux strength by inserting magnetic shunt 112 in slot 111 in magnetic core 110, as illustrated in FIG. 2. As described above, this increases the amount of highly permeable magnetic material in the magnetic flux return path and, thereby, increases magnetic flux strength throughout the magnetic flux circuit. The increase in magnetic flux strength increases the magnitude of eddy currents flowing in conducting member 108 and, thereby, increases the damping force generated.

Similarly, for this example, temperature sensing mechanism 114 may sense that conducting member 108 and/or magnets 104 are at a low temperature, T-T1. A low temperature for conducting member 108 and/or magnets 104 may be approximately 111,7°C (233K). At a low sensed temperature, temperature sensing mechanism 114 may decrease a flux strength in the magnetic flux circuit, and thus in the magnetic flux path through conducting member 108. The temperature sensing mechanism 114 may decrease the flux strength by withdrawing magnetic shunt 112 from slot 111 in magnetic core 110, as illustrated in FIG. 4. As described above, this decreases the amount of highly permeable magnetic material in the magnetic flux return path and, thereby, decreases magnetic flux strength throughout the magnetic flux circuit. The decrease in magnetic flux strength decreases the magnitude of eddy currents flowing in conducting member 108 and, thereby, decreases the damping force generated.

While the above examples describe a binary positioning of a magnetic shunt, it will be understood that temperature sensing mechanism 114 may adjust the position of magnetic shunt 112 gradually as the sensed temperature changes. Temperature sensing mechanism 114 may move magnetic shunt 112 throughout a range of positions, from fully inserted in magnetic core 110 to fully withdrawn from magnetic core 110. In one embodiment, temperature sensing mechanism 114 controls the position of magnetic shunt 112 so that eddy currents generated in conducting member 108 remain constant as the temperature of damping apparatus 100 changes.

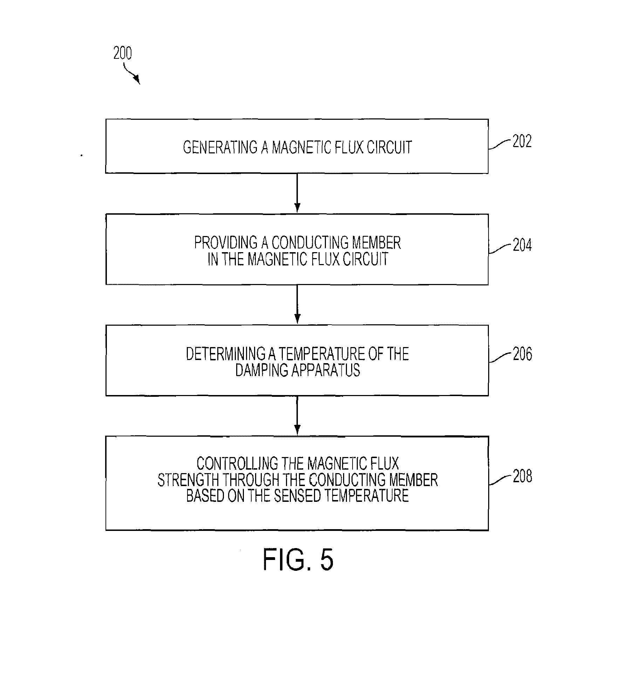

FIG. 5 is a flow chart 200 of exemplary steps for providing a damping force to a payload in accordance with an aspect of the present invention. To facilitate description, the steps of FIG. 5 are described with reference to the apparatus elements shown in FIGS. 1-4. It will be understood that one or more steps may be omitted and/or different elements may be utilized without departing from the spirit and scope of the present invention.

In step 202, a magnetic flux circuit is generated. In an exemplary embodiment, a pair of magnets 104 generates a magnetic flux circuit. The magnetic flux circuit has a magnetic flux path extending through gap 106 between magnets 104. The magnetic flux circuit further has a magnetic flux return path extending between magnets 104 through magnetic core 110.

In step 204, a conducting member is provided in the magnetic flux circuit. In an exemplary embodiment, conducting member 108 is provided in the magnetic flux path extending through gap 106. Conducting member 108 is configured to vibrate in response to a vibration of the payload. Conducting member 108 vibrates relative to magnets 104 within gap 106.

In step 206, a temperature of the damping apparatus is determined. In an exemplary embodiment, temperature sensing mechanism 114 determines a temperature of either magnets 104 or conducting member 108. For example, temperature sensing mechanism 114 may be configured to directly sense a temperature of the pair of magnets 104 and/or conducting member 108. Alternatively, temperature sensing mechanism 114 may be configured to sense another portion of the device or its surroundings from which the temperature of magnets 104 or conducting member 108 may be accurately deduced.

In step 208, a strength of magnetic flux through the conducting member is controlled based on the sensed temperature. In one exemplary embodiment, temperate sensing mechanism 114 controls the strength of the magnetic flux through conducting member 108 by controlling the magnetic flux strength in the magnetic flux circuit based on the sensed temperature from step 206. Temperature sensing mechanism 114 may control the magnetic flux strength in the magnetic flux circuit by changing the position of magnetic shunt 112. For example, to increase the magnetic flux strength, temperature sensing mechanism 114 may insert magnetic shunt 112 in slot 111 of magnetic core 110. Conversely, to decrease the magnetic flux strength, temperature sensing mechanism 114 may withdraw magnetic shunt 112 from slot 111 of magnetic core 110. As described above, temperature sensing mechanism 114 may increase the magnetic flux strength when the sensed temperature increases, or may decrease the magnetic flux strength when the sensed temperature decreases.

In another exemplary embodiment, the temperature sensing mechanism controls the strength of the magnetic flux through conducting member 108 by controlling the position of the conducting member 108 relative to the magnet(s) 104. Temperature sensing mechanism 114 may be configured to adjust or appropriately shift the edge of conducting member 108 to increase or decrease the magnetic flux through conducting member 108. Temperature sensing mechanism 114 may control the position of conducting member 108, so that the available eddy current path is correspondingly made more or less restricted depending on whether the sensed temperature is lower or higher, respectively.

Although the invention is illustrated and described herein with reference to specific embodiments, the invention is not intended to be limited to the details shown. Rather, various modifications may be made in the details within the scope and range of equivalents of the claims and without departing from the invention.

## Claims

1. A damping apparatus comprising:
at least a pair of magnets forming a gap therebetween, the magnets generating a magnetic flux circuit having a magnetic flux path within the gap and a magnetic flux return path outside the gap; and
a temperature sensing mechanism configured to control
- a strength of magnetic flux in the magnetic flux return path based on a sensed temperature, or
- a position of a magnetic shunt positioned at least partially within the magnetic flux return path of the magnets and coupled with the temperature sensing mechanism, based on a sensed temperature, and
wherein a damping force is generated based on the magnetic flux path within the gap.
2. The damping apparatus of claim 1, wherein at a low sensed temperature, the temperature sensing mechanism decreases the strength of the magnetic flux in the magnetic flux return path, and at a high sensed temperature, the temperature sensing mechanism increases the strength of the magnetic flux in the magnetic flux return path, wherein in particular the low sensed temperature is 111,7°C (233 K) and the high sensed temperature is 189,4°C (373 K).
3. The damping apparatus of claim 1 or 2, wherein the temperature sensing mechanism controls the strength of magnetic flux in the magnetic flux return path by controlling the position of a highly magnetically permeable material within the magnetic flux return path.
4. The damping apparatus of one of the preceding claims, wherein the temperature sensing mechanism senses a temperature of the pair of magnets, and controls the strength of magnetic flux in the magnetic flux return path based on the sensed temperature of the pair of magnets.
5. The damping apparatus of one of the preceding claims, comprising:
a conducting member positioned at least partially within the gap.
6. The damping apparatus of one of the preceding claims, wherein at a low sensed temperature, the temperature sensing mechanism positions the magnetic shunt substantially outside of the magnetic flux return path, and at a high sensed temperature, the temperature sensing mechanism positions the magnetic shunt substantially within the magnetic flux return path, wherein in particular the low sensed temperature is 111,7°C (233 K) and the high sensed temperature is 189,4°C (373 K).
7. The damping apparatus of one of the preceding claims, further comprising a magnetic core coupled to the at least one pair of magnets, the magnetic core defining in part the magnetic flux return path, wherein in particular the magnetic shunt is positioned within a slot defined in the magnetic core.
8. The damping apparatus of claim 7, wherein at a low sensed temperature, the temperature sensing mechanism positions the magnetic shunt substantially outside of the slot defined in the magnetic core, and at a high sensed temperature, the temperature sensing mechanism positions the magnetic shunt substantially within the slot defined in the magnetic core, wherein in particular the low sensed temperature is 111,7°C (233 K) and the high sensed temperature is 189,4°C (373 K).
9. The damping apparatus of one of the preceding claims, wherein the magnetic shunt is formed from highly magnetically permeable material.
10. The damping apparatus of one of the preceding claims, wherein the temperature sensing mechanism senses a temperature of the conducting member, and controls the position of the magnetic shunt based on the sensed temperature of the conducting member.
11. The damping apparatus of one of the preceding claims, wherein the temperature sensing mechanism senses a temperature of the at least one pair of magnets, and controls the position of the magnetic shunt based on the sensed temperature of the at least one pair of magnets.
12. A method of providing a damping force to a payload subject to vibration, comprising the steps of:
generating with a pair of magnets a magnetic flux circuit having a magnetic flux path and a magnetic flux return path;
providing a conducting member within the magnetic flux path, the conducting member configured to vibrate relative to the pair of magnets in response to the vibration of the payload;
determining a temperature of one of the pair of magnets and the conducting member; and
controlling a strength of magnetic flux through the conducting member based on the sensed temperature.
13. The method of claim 12, wherein the controlling step comprises:
controlling a strength of the magnetic flux in the magnetic flux return path based on the sensed temperature.
14. The method of claim 12 or 13, wherein the controlling step comprises:
controlling the position of the conducting member relative to the pair of magnets based on the sensed temperature.
